# EUROPEAN PATENT APPLICATION

(11) **EP 3 216 897 A1**
(43) Date of publication of application: **13.09.2017**
(21) Application number: 16194681.9
(22) Date of filing: 19.10.2016
(51) Int. Cl.: C25B 15/08, C25B 1/10, C25B 9/20, F02M 25/12, F02B 43/10

(54) **AUTOMOBILE HYDROGEN AND OXYGEN GENERATOR**

(30) Priority: 08.03.2016 CN 201610131388
(71) Applicant: Shanghai Hung Ming Amperex Technology Limited, Shanghai 201111 (CN)
(72) Inventor: GUI, Jianming, Shanghai, Shanghai 201111 (CN)
(74) Representative: Szabo, Zsolt

(57) **Abstract**

An automobile hydrogen oxygen generator includes an electrolytic hydrogen-oxygen generator, a motor, a battery, a filter and a circuit board. The electrolytic hydrogen-oxygen generator has water therein, an electrolytic tank connected to the battery, a relay sandwiched between the electrolytic tank and the battery and connected to the circuit board which is connected to an ignition switch. The filter is connected to the motor via air inlet and the electrolytic hydrogen-oxygen generator is connected to the air inlet via an air conduit.

## Description

### FIELD OF THE INVENTION

This disclosure is related to an automobile hydrogen and oxygen generator, and more particularly, to a water electrolyte hydrogen and oxygen generator used for an automobile.

### BACKGROUND OF THE INVENTION

Carbon accumulation is a common problem for automobiles running under incomplete combustion, which causes inferior fuel efficiency and generation of toxic and contaminated exhaust air, i.e., carbon monoxide and suspended particles, let alone the increase of fuel consumption and cost. In addition, the conventional electrolytic cell is either in series or in parallel despite the type of the cell, which is low in efficiency and adaption.

### SUMMARY OF THE INVENTION

The primary objective of the present invention is to provide an automobile hydrogen oxygen generator having an electrolytic hydrogen-oxygen generator, a motor, a battery, a filter and a circuit board, characterized in that: the electrolytic hydrogen-oxygen generator has water therein, an electrolytic tank connected to the battery, a relay sandwiched between the electrolytic tank and the battery and connected to the circuit board which is connected to an ignition switch; the filter is connected to the motor via air inlet and the electrolytic hydrogen-oxygen generator is connected to the air inlet via an air conduit.

Another objective of the present invention is that the electrolytic tank containing therein water is provided inside an enclosed casing of the hydrogen oxygen generator and includes at least two parallel baffles, at least two proton exchange membrane and water guides respectively sandwiched between the at least two baffles and the at least two proton exchange membranes; on two opposite sides of each of the baffles and each of the proton exchange membranes, a plate is provided and connected to the battery of direct current in nature; at bottom of the plates and water guides, holes are defined; outlets are formed on top of the plates and water guides, periphery of each of the plates, proton exchange membranes and water guides is sealed in a watertight manner so that water is able to flow through the holes, exits from the outlets and returns to the casing; the plates are fixed under the baffles and respectively have a height of 10%∼90% the height of the baffles; ribs are alternately installed inside each of the water guides.

Advantages of the embodiment of the present disclosure:
1. Completely solve the problem caused by the contaminated exhaust air due to incomplete combustion.
   After addition of the mixed air of hydrogen and oxygen into the generator, the original exhaust air of carbon monoxide and carbon-hydrogen compound is able to be burned and transformed into energy with water as the final product, which is friendly to the environment and zero emission to the air. Therefore, with the revolutionary product of the present disclosure, with the benefit of reducing fuel consumption, the original toxic contamination, including but not limited to, carbon monoxide and carbon-hydrogen compound as well as suspended particles is complete vanished.
2. Due to the addition of oxygen, the generator is able to operate with its full capacity, complete burn of fuel, to increase fuel efficiency. As hydrogen is an environmental friendly fuel for such as aircraft and rocket propeller, its heat output can reach more than three times of the gasoline and is much higher than diesel. By mean of precise control from microcomputers, fuel decrease can be compensated by the addition of hydrogen and reach the purpose of fuel preservation up to 15∼25%.
3. Based on the same principle, the addition of hydrogen is basically the same as the addition of extra fuel and because the hydrogen has three times of heat output and five times of burning speed when compared with gasoline, higher heat output and faster burning speed reduce the power loss during the transformation from heat to pure energy (generator transforms heat to kinetic energy) and escalate the transformation rate. Therefore, under the same volume of fuel, with the addition of hydrogen, the power of automobile is increased. According to experiment data, the power output can be increased up to 10%.
4. Preservation of the generator: as the carbon accumulation issue becomes more serious along the time, the addition of hydrogen helps complete burn of the fuel, which reduces carbon accumulated in the chamber. Also, the ignition energy required for hydrogen is 0.02, which is one tenth of gasoline and the ignition spreading speed for hydrogen is 4.85 m/sec, which is five (5) times faster than gasoline. Especially, the ignition gap of hydrogen is only 0.06 second and only one third of gasoline. Smaller ignition gap helps spread the flame faster to all the corners inside the chamber and even to the rim of the piston to help remove the carbon accumulated therein. It is almost impossible to have new carbon accumulation inside the chamber and thus the generator is protected. In addition, the frequency of oil change can be prolonged and the life span of the generator is extended up to 30%, according to statistics.

### BRIEF INTRODUCTION OF THE DRAWINGS

Fig. 1 is a schematic structural view of the present invention;
Fig. 2 is a schematic structural view of the electrolytic cell of the present invention;
Fig. 3 is a schematic structural view of the baffles of the present invention; and
Fig. 4 is a schematic structural view of the baffles of the present invention.

### DETAILED DESCRIPTION OF THE PREFERRED EMBODIMENT

The preferred embodiment of the present disclosure would be clear with the following description along with the attached drawings.

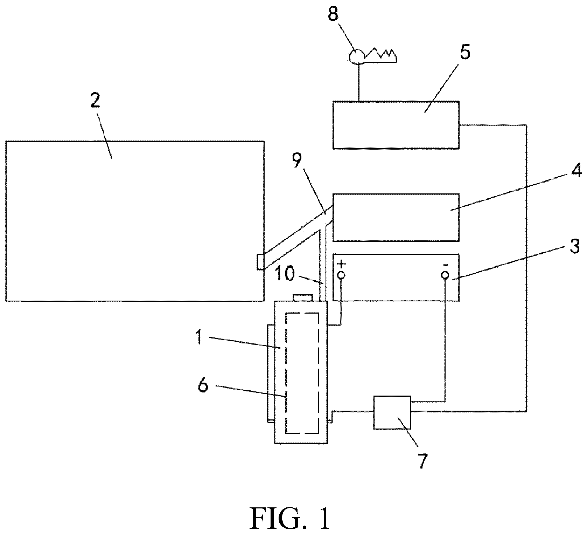

With reference to Fig. 1, it is to be noted that the automobile hydrogen-oxygen generator constructed in accordance with the present disclosure includes an electrolytic hydrogen-oxygen generator 1, a motor 2, a battery 3, a filter 4 and a circuit board 5. An electrolytic tank 6 containing therein water is also provided and connected to the battery 3 with a relay 7 sandwiched there between. The relay 7 is connected to the circuit board 5 which is connected to the ignition switch 8. The filter 4 is connected to the motor 2 via an air inlet 9. The electrolytic hydrogen-oxygen generator 1 is connected to the air inlet 9 via an air conduit 10.

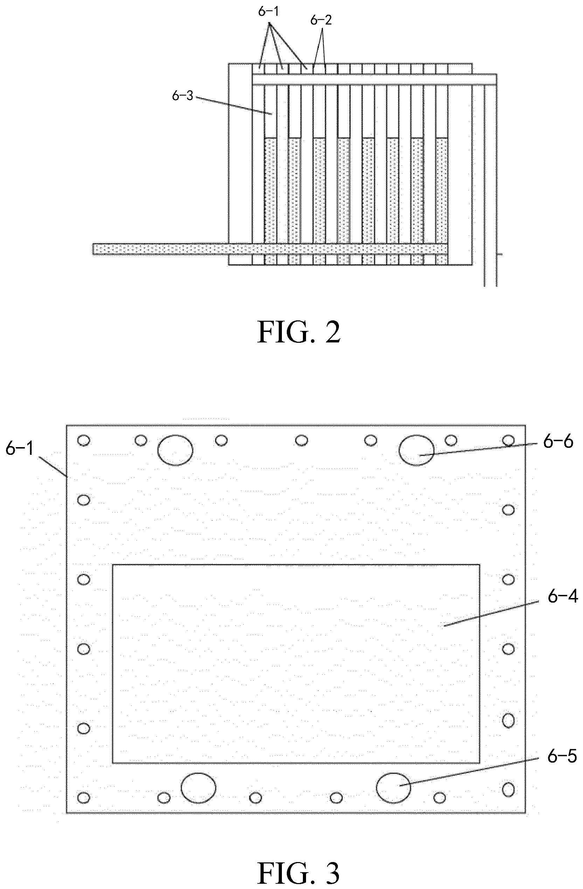

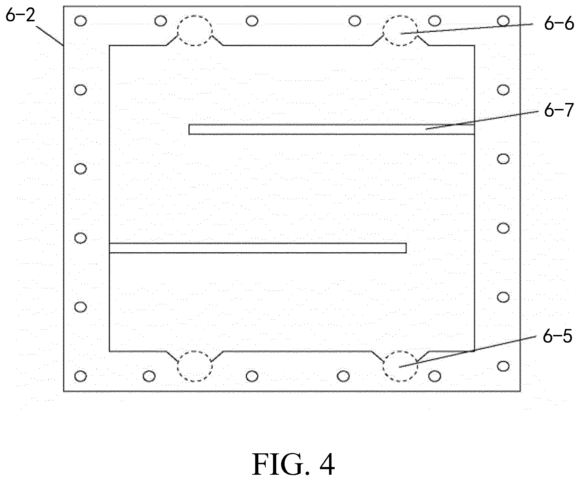

With reference to Figs. 2, 3 and 4, the electrolytic tank 6 is installed inside the enclosed electrolytic hydrogen-oxygen generator 1 and includes at least two parallel baffles 6-1, at least two proton exchange membrane 6-2 and water guides 6-3 respectively sandwiched between the at least two baffles 6-1 and the at least two proton exchange membranes 6-2. On two opposite sides of each of the baffles 6-1 and each of the proton exchange membranes 6-2, a plate 6-4 is provided and connected to the battery 3 of direct current in nature. At the bottom of the plates 6-4 and water guides 6-3, there are provided with holes 6-5. On the top, outlets 6-6 are formed. The periphery of each of the plates 6-4, proton exchange membranes 6-2 and water guides 6-3 is sealed in a watertight manner so that water is able to flow through the holes 6-5, exits from the outlets 6-6 and returns to the case. The plates 6-4 are fixed under the baffles 6-1 and respectively have a height of 10%∼90% the height of the baffles 6-1. Ribs 7-1 are alternately installed inside the space inside each of the water guides 6-3.

Without the use of the traditional addition of electrolyte in the battery, the electrolytic hydrogen-oxygen generator constructed in accordance with the embodiment of the present invention uses water to produce essential hydrogen and oxygen.

The use of proton exchange membranes applies nanotechnology to boost the generation of oxygen more readily and easily.

The implementation of electrolytic hydrogen-oxygen generator as well as other novel elements listed in the embodiment of the present invention accomplishes two major goals, i.e., reduce emission and cost saving. In the aspect of reduce emission, the application of the novel electrolytic hydrogen-oxygen generator in a normal car is able to achieve 13.6 and 120 times lower than the fifth European Emission Standards and the commercial automobile is able to achieve 6.5 and 30 times lower than the Standards. In the aspect of fuel saving, with the use of the hydrogen-oxygen generator of the embodiment of the present invention, a normal automobile is able to save up to 15∼25% of fuel consumed and the horsepower may also boost up to 10%. The lifespan of the generator may well be prolonged.

The disclosure of the preferred embodiment is introduced without any prejudice and those skilled in the art would easily understand from the disclosure the technology used therein and readily develop a modification, amendment or improvement of what is disclosed. Therefore, the disclosure above is not in a limited sense and the scope of the disclosure should be defined in the following claims.

## Claims

1. An automobile hydrogen oxygen generator having an electrolytic hydrogen-oxygen generator, a motor, a battery, a filter and a circuit board, **characterized in that**:
the electrolytic hydrogen-oxygen generator has water therein, an electrolytic tank connected to the battery, a relay sandwiched between the electrolytic tank and the battery and connected to the circuit board which is connected to an ignition switch;
the filter is connected to the motor via air inlet and the electrolytic hydrogen-oxygen generator is connected to the air inlet via an air conduit.

2. The generator as claimed in claim 1, wherein an electrolytic tank containing therein water is provided inside an enclosed casing of the hydrogen oxygen generator and includes at least two parallel baffles, at least two proton exchange membrane and water guides respectively sandwiched between the at least two baffles and the at least two proton exchange membranes;
on two opposite sides of each of the baffles and each of the proton exchange membranes, a plate is provided and connected to the battery of direct current in nature;
at bottom of the plates and water guides, holes are defined;
outlets are formed on top of the plates and water guides, periphery of each of the plates, proton exchange membranes and water guides is sealed in a watertight manner so that water is able to flow through the holes, exits from the outlets and returns to the casing;
the plates are fixed under the baffles and respectively have a height of 10%∼90% the height of the baffles;
ribs are alternately installed inside each of the water.
